# EUROPÄISCHE PATENTANMELDUNG

(11) **EP 4 230 350 A1**
(43) Veröffentlichungstag der Anmeldung: **23.08.2023**
(21) Anmeldenummer: 22211122.1
(22) Anmeldetag: 02.12.2022
(51) Int. Cl.: B25B 23/147, G05B 19/418

(54) **SCHRAUBSYSTEM SOWIE ANLAGE ZUR BEARBEITUNG VON WERKSTÜCKEN MIT EINEM SCHRAUBSYSTEM**

(30) Priorität: 16.02.2022 DE 102022201635
(71) Anmelder: DEPRAG Schulz GmbH u. Co., 92224 Amberg (DE)
(72) Erfinder: MÜLLER, Stefan, 92224 Amberg (DE); PFEIFFER, Rolf, 92224 Amberg (DE); ROSENKRANZ, Carsten, 92284 Poppenricht (DE)
(74) Vertreter: FDST Patentanwälte

(57) **Zusammenfassung**

Die Erfindung betrifft ein Schraubsystem (6) sowie eine Anlage (2) mit einem solchen Schraubsystem (6), umfassend eine Schraubereinheit (20), die einen elektrischen Antriebsmotor (23), einen Motorregler (22) zur Steuerung des Antriebsmotors (23) aufweist sowie weiterhin umfassend eine Schraubersteuerung zur Steuerung eines Schraubprozesses, welche aufgeteilt ist in einen zeitkritischen Steuerungsteil (24) und in einen nicht zeitkritischen Steuerungsteil (26), und der nicht zeitkritische Steuerungsteil (26) zur Integration in einer übergeordneten Anlagensteuerung (12) vorgesehen und ausgebildet ist. Durch die Aufteilung der Schraubersteuerung werden Komponenten einer Anlagensteuerung (12) für das Schraubsystem (6) mitgenutzt.

## Beschreibung

Die Erfindung betrifft ein Schraubsystem sowie eine Anlage zur Bearbeitung von Werkstücken mit einem solchen Schraubsystem.

Werkstücke werden häufig durch Schraubverbindungen miteinander verbunden. In industriellen Anlagen werden hierzu häufig stationäre Schraubsysteme eingesetzt, bei denen die Werkstücke mithilfe einer stationären Schraubereinheit und mithilfe eines gesteuerten Schraubprozesses miteinander verbunden werden.

Bei derartigen (Teil-) automatisierten Schraubprozessen wird die jeweilige Schraube mithilfe der Schraubereinheit entsprechend einem vorgegebenen individuellen Schraub- oder Steuerprogramm verschraubt. Dieses gibt dabei typischerweise einen Drehzahlverlauf, einen Drehmomentverlauf und / oder Minimalwerte oder Maximalwerte für die Drehzahl und / oder Drehmomente vor. Diese Vorgaben für die Schraubparameter werden in Abhängigkeit der Schraubpartner und in Abhängigkeit der jeweiligen Anforderungen gewählt.

Die Schraubereinheiten weisen allgemein einen Antriebsmotor auf, über den ein Abtrieb und damit ein Werkzeug in eine Rotationsbewegung versetzt wird. Mittels des Werkzeugs wird die Schraube angetrieben. Der Motor wird regelmäßig mithilfe eines Motorreglers gesteuert und insbesondere auf die durch das individuelle Steuerprogramm vorgegebenen Sollwerte für die Schraubparameter geregelt. Beim Schraubprozess werden kontinuierlich Istwerte erfasst, auf deren Basis der Antriebsmotor auf die Sollwerte geregelt wird.

Die Schraubereinheiten sind dabei typischerweise für eine Vielzahl von unterschiedlichen individuellen Schraubprozessen ausgebildet. Für unterschiedliche Anwendungen müssen daher unterschiedliche individuelle Steuerprogramme zur Verfügung gestellt werden.

Die Schraubsysteme werden innerhalb einer Anlage typischerweise als eigenständige, autarke Systeme eingesetzt. Hierzu weisen sie jeweils eine Schraubersteuerung auf, die den Schraubprozess steuert. Bei den Schraubsystemen handelt es sich daher häufig um vergleichsweise aufwändige Systeme, die eine Vielzahl sowohl von Hardwarekomponenten als auch von Softwarekomponenten erfordern.

Ausgehend hiervon liegt der Erfindung die Aufgabe zugrunde, bei derartigen Schraubsystemen innerhalb einer industriellen Fertigungsanlage eine Vereinfachung und damit auch Kostenvorteile zu erreichen.

Die Aufgabe wird gemäß der Erfindung gelöst durch ein Schraubsystem mit einer Schraubereinheit, die einen elektrischen Antriebsmotor, einen Motorregler zur Steuerung des Antriebsmotors sowie eine Schraubersteuerung zur Steuerung eines Schraubprozesses aufweist. Die Schraubersteuerung enthält einen zeitkritischen Steuerungsteil und einen nicht zeitkritischen Steuerungsteil und besteht insbesondere aus diesen beiden Steuerungsteilen. Der nicht zeitkritische Steuerungsteil ist zur Integration in einer übergeordneten Anlagensteuerung vorgesehen und ist im Betrieb auch in dieser integriert. Die beiden Steuerungsteile kommunizieren zumindest im Betreib miteinander. Hierzu sind sie insbesondere über eine Kommunikationsverbindung miteinander verbunden.

Die Aufgabe wird gemäß der Erfindung weiterhin gelöst durch eine Anlage, speziell eine industrielle Fertigungsanlage zur Bearbeitung von Werkstücken an einem Arbeitsplatz mit einem solchen Schraubsystem.

Die Aufteilung der Schraubersteuerung in einen zeitkritischen und in einen nicht zeitkritischen Steuerungsteil beruht dabei auf der Überlegung, dass zunächst eine solche Aufteilung grundsätzlich möglich ist. Durch die Auslagerung von nicht zeitkritischen Steuerungsteilen wird der Vorteil erzielt, dass vorhandene Komponenten einer Anlagensteuerung genutzt werden können und auch genutzt werden, sodass also auf bestehende Hardwarekomponenten zurückgegriffen werden kann. Dadurch ergibt sich eine Einsparung. Die Schraubereinheit, also die eigentliche Schrauber-Baueinheit kann daher - im Vergleich zu herkömmlichen Systemen - in ihrer Hard- sowie softwaretechnischen Ausgestaltung reduziert werden. Die Funktionsfähigkeit bleibt jedoch weiterhin vollumfänglich gewahrt, speziell da die für den jeweiligen Schraubprozess zeitkritischen Komponenten gerade nicht ausgelagert sind. Für die zeitkritischen Prozesse sind allgemein spezielle Hardwarekomponenten bereitgestellt, welche eine entsprechend schnelle Auswertung von Daten sowie deren Umsetzung in Steuersignale speziell für den Motorregler gewährleisten.

Zeitkritische Prozesse (die über den zeitkritischen Steuerungsteil gesteuert werden) sind insbesondere solche Steuerprozesse, über die der eigentliche Schraubvorgang, also ein z.B. drehmoment- und / oder drehzahlgesteuertes Eindrehen (ggf. auch Ausdrehen) einer Schraube in ein Werkstück gesteuert wird. Bei solchen zeitkritischen Prozessen erfolgt typischerweise fortlaufend ein Soll-Ist-Wert-Vergleich üblicherweise mit einer Regelung auf den Sollwert.

Nicht zeitkritische Prozesse (die über den nicht zeitkritischen Steuerungsteil gesteuert werden) sind demgegenüber Steuerprozesse, die sich gerade nicht mit dem eigentlichen Schraubvorgang befassen, wie z.B. die Verarbeitung von Endwertdaten und das Speichern von Schraubprogrammen. Bei den Endwertdaten handelt es sich um Daten, die nach Abschluss des Schraubvorgangs abgespeichert werden. Dabei handelt es sich beispielsweise um erreichte Endwerte von Schraubparametern wie z.B. Anzugsdrehmoment. Endwertdaten sind beispielsweise auch ein Verlauf der Werte eines oder mehrerer Schraubparameter (Drehmoment, Drehzahl....) über den gesamten Schraubvorgang. Die nicht zeitkritischen Steuerprozesse betreffen beispielsweise auch die Auswahl eines geeigneten individuellen Schraubprozesses in Abhängigkeit z.B. des zu behandelnden Werkstücks, der verwendeten Schrauben und / oder der eingesetzten Schraubereinheit. Über einen solchen individuellen Schraubprozess wird regelmäßig der zuvor beschriebene eigentliche Schraubvorgang gesteuert.

Durch die Kommunikationsverbindung ist eine wechselseitige Signal- und Datenübertragung zwischen den beiden Steuerungsteilen sichergestellt, wie nachfolgend noch näher erläutert wird.

Sofern vorliegend von einer übergeordneten Anlagensteuerung gesprochen wird, so wird hierunter eine Steuerungsvorrichtung verstanden, welche weitere Prozesse innerhalb der Anlage neben dem eigentlichen Schraubprozess steuert. Insbesondere steuert die Anlagensteuerung mehrere Fertigungsschritte bei der Bearbeitung der Werkstücke. Insbesondere steuert sie eine vorzugsweise getaktete Bearbeitung der Werkstücke in mehreren Arbeitsplätzen oder Arbeitsstationen. Sie koordiniert die Arbeitsabläufe von unterschiedlichen Arbeitsplätzen und Arbeitsstationen, wie zum Beispiel auch einen (getakteten) Transport der zu bearbeitenden Werkstücke mit Hilfe einer Fördereinrichtung. Der nicht zeitkritische Steuerungsteil ist daher in einer Hardware-Komponente einer solchen übergeordneten Anlagensteuerung integriert.

Insbesondere ist der nicht zeitkritische Steuerungsteil in einer vorhandenen Hardware-Komponente integriert, so dass also über diese gemeinsame Hardware-Komponente neben der Steuerung von Teilen des Schraubprozesses über den nicht zeitkritischen Steuerungsteil auch weitere Prozesse und Arbeitsabläufe der Anlage neben dem Schraubprozess gesteuert werden.

Bei der Anlagensteuerung handelt es sich typischerweise um eine SPS-Steuerung, alternativ erfolgt die Steuerung über einen sogenannten Industrie PC insbesondere mit SPS-Funktionalität. Eine solche SPS-Steuerung oder auch ein solcher Industrie PC mit SPS-Funktionalität zeichnet sich üblicherweise durch eine Baueinheit, nachfolgend auch als Steuermodul bezeichnet, mit einem programmierbaren Steuerbaustein aus. Die Baueinheit weist typischerweise Eingänge für Eingangssignale sowie Ausgänge für Ausgangssignale sowie typischerweise eine Programmierschnittstelle auf, über die ein gewünschtes Steuerprogramm eingespielt werden kann. Über die Eingänge werden üblicherweise Sensorsignale erfasst, die entsprechend dem eingespielten Steuerprogramm verarbeitet werden. Am Ausgang wird ein geeignetes (Steuer-) Signal z.B. zur Ansteuerung von Geräten / Aktoren bereitgestellt.

Unter Motorregler wird vorliegend eine Leistungselektronik (Leistungsmodul) verstanden, welche zur Ansteuerung und Regelung des Antriebsmotors ausgebildet ist. Speziell versorgt der Motorregler den Antriebsmotor mit der erforderlichen elektrischen Leistung und der Bereitstellung des erforderlichen Motorstroms. Über den Motorregler werden die Schraubparameter wie Drehzahl oder Drehmoment in Abhängigkeit von erfassten Istwerten geregelt. Allgemein sind innerhalb der Schraubereinheit ein oder mehrere Erfassungseinheiten, wie Sensoren oder Geber integriert, welche zur Erfassung der aktuellen Istwerte ausgebildet sind.

In bevorzugter Ausgestaltung bilden der zeitkritische Steuerungsteil und der Motorregler ein intelligentes Leistungsmodul, welches eine Funktionseinheit bildet. Diese Funktionseinheit ist gemäß einer ersten Ausführungsvariante unmittelbar Teil der Schraubereinheit. Die Schraubereinheit weist ein Gehäuse auf, innerhalb dessen das intelligente Leistungsmodul zusammen mit dem Antriebsmotor integriert ist.

Gemäß einer zweiten Ausführungsvariante ist dieses intelligente Leistungsmodul Teil einer separaten Baueinheit oder bildet eine solche separate Baueinheit, die also zusätzlich zur Schraubereinheit ausgebildet ist. Dieser Ausführungsvariante wird insbesondere bei Schraubsystemen mit hoher Leistung beispielsweise von größer 1 kW oder 2 kW eingesetzt. Diese separate Baueinheit steht typischerweise über eine Kabelverbindung mit der verbleibenden Schraubereinheit in Verbindung, wobei diese Kabelverbindung zur Leistungsversorgung und vorzugsweise auch zur Datenverbindung dient. Die Kabelverbindung weist daher typischerweise eine Versorgungsleitung zur Übertragung der elektrischen Leistung sowie weiterhin eine Steuer- oder Kommunikationsleitung für die Datenverbindung auf.

Bei der zweiten Variante ist das Schraubsystem daher in insgesamt drei getrennte Baueinheiten aufgeteilt, nämlich die Schraubereinheit, das separate intelligente Leistungsmodul sowie eine Hardware-Komponente in der übergeordneten Anlagensteuerung mit dem nicht zeitkritischen Steuerungsteil.

Grundsätzlich besteht auch die Möglichkeit, dass der zeitkritische Steuerungsteil sowie der Motorregler in getrennten Einheiten untergebracht sind, wobei in diesem Fall der zeitkritische Steuerungsteil in der Schraubereinheit und der Motorregler in einer separaten Baueinheit untergebracht ist.

Diese separate Baueinheit, also entweder der ausgelagerte Motorregler alleine oder das ausgelagerte intelligente Leistungsmodul, sind dabei beispielsweise in einem von der Schraubereinheit getrennten Schaltschrank angeordnet und beispielsweise als Modul auf einer (Hut-) Schiene aufgerastet. Grundsätzlich besteht die Möglichkeit, dass diese separate Baueinheit in einem entsprechenden Schaltschrank der übergeordneten Anlagensteuerung als zusätzliche Baueinheit zu den sonstigen Komponenten der übergeordneten Anlagensteuerung angeordnet ist. Der nicht zeitkritische Steuerungsteil ist bevorzugt innerhalb einer ggf. weiteren Komponente der Anlagensteuerung als Softwaremodul integriert.

Wie eingangs erwähnt, wird ein jeweiliger individueller Schraubprozess durch ein individuelles Schraub- oder Steuerprogramm gesteuert. Dieses individuelle Steuerprogramm ist dabei regelmäßig im zeitkritischen Steuerungsteil enthalten.

Ein derartiges individuelles Steuerprogramm besteht typischerweise aus mehreren Teilen, die als Schraubstufen bezeichnet werden und die insbesondere parametrierbar sind. Diese definieren den Ablauf des Schraubprozesses, speziell des eigentlichen Schraubvorgangs. Es folgen typischerweise mehrere Schaubstufen aufeinander. Speziell werden durch die Schraubstufen Zielparameter (z.B. Drehmoment oder Drehwinkel) vorgegeben, die innerhalb einer jeweiligen Stufe erreicht werden und die auch überwacht werden. So wird beispielsweise bei einer ersten Schraubstufe als Zielparameter ein definierter Drehwinkel oder ein definiertes (geringes) Anzugsdrehmoment vorgegeben und bei einer zweiten Schraubstufe ein definiertes (höheres) Anzugsdrehmoment vorgegeben. In der ersten Schraubstufe wird üblicherweise eine höhere Drehgeschwindigkeit eingestellt, um den gesamten Schraubprozess zu beschleunigen. Weitere, insbesondere ergänzende Parameter innerhalb der unterschiedlichen Schraubstufen sind beispielsweise Drehgeschwindigkeit, Schraubzeiten, Wartezeiten zwischen zwei Schraubstufen usw. Die Schraubstufen und damit das Steuerprogramm insgesamt sind typischerweise parametrierbar.

Der zeitkritische Steuerungsteil ist insbesondere zur Speicherung und Ausführung zumindest eines solchen individuellen Steuerprogramms ausgebildet. Unter Ausführung des individuellen Steuerprogramms wird dabei die Ausführung eines ausführbaren Programmcodes verstanden.

Insbesondere ist der zeitkritische Steuerungsteil in diesem Sinne daher auch für eine vorzugsweise kontinuierliche Sollwertvorgabe für den Motorregler ausgebildet und führt diese im Betrieb auch durch. Die Sollwertvorgabe erfolgt dabei typischerweise auf Basis des jeweils aktuellen individuellen Steuerprogramms und auf der Basis von Istwerten, die von der Schraubereinheit und der darin enthaltenen Erfassungseinheit zur Verfügung gestellt werden.

Bevorzugt ist der zeitkritische Steuerungsteil weiterhin auch zur Verarbeitung und zur Auswertung von derartigen Istwerten bei der Durchführung des Schraubprozesses ausgebildet. Die Datenverbindung zwischen der Erfassungseinheit und dem zeitkritischen Steuerungsteil ist dabei für eine geeignete, ausreichend schnelle Datenübertragung ausgebildet.

Schließlich ist der zeitkritische Steuerungsteil weiterhin in bevorzugter Ausgestaltung für einen Signal- und Datenaustausch mit dem nicht zeitkritischen Steuerungsteil verbunden. Im Rahmen dieses Austausches werden beispielsweise Statusinformationen von der Schraubereinheit, wie beispielsweise eine Typkennung oder eine Werkzeugkennnummer, eine Betriebsbereitschaft oder sonstige Statusinformationen übertragen. Ergänzend oder alternativ werden insbesondere Messwerte zu dem durchgeführten Schraubprozess, die sogenannten Schraubergebnisse, übermittelt.

Diese Kommunikationsverbindung ist vorzugsweise für eine bidirektionale Kommunikation ausgebildet, sodass also der zeitkritische Steuerungsteil auch Daten und Steuersignale vom nicht zeitkritischen Steuerungsteil erhält. Dies betrifft insbesondere die Vorgabe oder Auswahl eines speziellen individuellen Steuerprogramms, ein Startsignal zum Starten eines jeweiligen Steuerprogramms usw.

Der zeitkritische Steuerungsteil ist daher in bevorzugter Ausgestaltung allgemein zur Ausführung von zumindest einem, vorzugsweise von mehreren und insbesondere von allen dieser zuvor aufgeführten Schritte ausgebildet, nämlich
- zur Speicherung und Ausführung zumindest eines individuellen Steuerprogramms,
- zur Verarbeitung und Auswertung von Istwerten des Schraubprozesses,
- zur Sollwertvorgabe für den Motorregler,
- zum Signal- und Datenaustausch mit dem nicht zeitkritischen Steuerungsteil.

Während die drei erstgenannten Schritte oder Funktionen zeitkritisch sind, ist die letztgenannte Funktion des Datenaustausches nicht zeitkritisch. Unter zeitkritische Funktionen und Schritte werden vorliegend insbesondere die für die Motorregelung anhand des ausgewählten individuellen Steuerprogramms erforderlichen Maßnahmen verstanden. Die sind im speziellen die Verarbeitung und Auswertung der mitgeteilten Istwerte sowie die kontinuierliche Sollwertvorgabe auf Basis dieser Istwerte und auf Basis des ausgewählten Steuerprogramms.

Demgegenüber ist der nicht zeitkritische Steuerungsteil zur Ausführung von ein oder mehreren und insbesondere allen der nachfolgenden Funktionen oder Schritte ausgebildet:
Gemäß einer bevorzugten Ausgestaltung sind über den nicht zeitkritischen Steuerungsteil Funktionen im Zusammenhang mit der Erstellung oder mit der Parametrierung eines individuellen Steuerprogramms bereitgestellt. Insbesondere besteht die Möglichkeit, dass ein neues individuelles Steuerprogramm mithilfe des nicht zeitkritischen Steuerungsteils erstellt wird. Daneben besteht auch die Möglichkeit, dass ein bereits bestehendes individuelles Steuerprogramm angepasst und parametriert wird.

Gemäß einer weiteren bevorzugten Variante wird über den nicht zeitkritischen Steuerungsteil eine Plausibilitätsprüfung oder Gültigkeitsprüfung eines jeweiligen individuellen Steuerprogramms durchgeführt. Hierbei wird beispielsweise überprüft, ob das Steuerprogramm unter Berücksichtigung beispielsweise der Schraubereinheit überhaupt geeignet zur Durchführung eines Schraubprozesses ist. Weiterhin wird beispielsweise geprüft, ob das jeweilige individuelle Steuerprogramm noch gültig ist oder bereits eine neue Version vorliegt.

Über den nicht zeitkritischen Steuerungsteil werden vorzugsweise weiterhin die individuellen Steuerprogramme verwaltet. Insbesondere werden diese außerhalb der Schraubereinheit und/oder außerhalb des intelligenten Leistungsmoduls abgespeichert. Typischerweise wird nämlich eine Vielzahl von Steuerprogrammen bereitgestellt. Durch die Auslagerung in Hardwarekomponenten in die übergeordneten Anlagensteuerung steht für die Abspeicherung einer Vielzahl von Steuerprogrammen ausreichend Speicherplatz Verfügung.

Grundsätzlich ist der nicht zeitkritische Steuerungsteil entsprechend auch zur Übertragung eines individuellen Steuerprogramms an den zeitkritischen Steuerungsteil ausgebildet.

Analog zum zeitkritischen Steuerungsteil ist auch der nicht-zeitkritische Steuerungsteil allgemein zur insbesondere bidirektionalen Kommunikation mit dem zeitkritischen Steuerungsteil verbunden.

Zweckdienlicherweise ist der nicht zeitkritische Steuerungsteil insbesondere auch zur Überprüfung des Status der Schraubereinheit inklusive einer Typerkennung ausgebildet.

In bevorzugter Ausgestaltung ist der nicht zeitkritische Steuerungsteil zu Kommunikation mit der übergeordneten Anlagensteuerung ausgebildet. Bevorzugt kommuniziert diese übergeordnete Anlagensteuerung ausschließlich mit dem nicht zeitkritischen Steuerungsteil und nicht mit dem zeitkritischen Steuerungsteil. Über die übergeordnete Anlagensteuerung werden beispielsweise übergeordnete Steuer- oder Informationssignale übermittelt, die beispielsweise aus dem Gesamt-Anlagenprozess abgeleitet sind. Beispielsweise gibt die übergeordnete Anlagensteuerung ein Start- oder Freigabesignal zur Durchführung des Schraubprozesses. Dies erfolgt beispielsweise automatisch in Abhängigkeit eines (nicht durch das Schraubsystem beeinflussten) Anlagenzustandes, beispielsweise in Abhängigkeit des Vorhandenseins von Bauteilen in der korrekten Position am Arbeitsplatz. Auch wird typischerweise über die Anlagensteuerung bei getakteten Arbeitsvorgängen der Arbeitstakt vorgegeben, nach dem sich auch das Schraubsystem richtet.

In bevorzugter Ausgestaltung ist der nicht zeitkritische Steuerungsteil für eine Kommunikation mit einer Eingabeeinheit für Benutzereingaben ausgebildet. Über diese Eingabeeinheit erfolgt beispielsweise die Auswahl, Erstellung oder Parametrisierung der individuellen Steuerprogramme.

Schließlich ist der nicht zeitkritische Steuerungsteil in bevorzugter Ausgestaltung zum Speichern und zur Dokumentation von Messwerten zum jeweils durchgeführten Schraubprozess ausgebildet, also zum Speichern und zur Dokumentation der Schraubergebnisse. Hierzu greift der nicht zeitkritische Steuerungsteil auf einen geeigneten Speicher zu.

Wie bereits zuvor erläutert, ist die Schraubereinheit und auch das gesamte Schraubsystem zur Durchführung von unterschiedlichen individuellen Schraubprozessen vorgesehen, die sich im Hinblick auf zumindest einen Schraubparameter unterscheiden und die durch ein jeweiliges individuelles Steuerprogramm, also ein ausführbares Schraub- oder Computerprogramm, gesteuert werden. Dieses wird zumindest temporär im zeitkritischen Steuerungsteil hinterlegt.

In bevorzugter Ausgestaltung wird das individuelle Steuerprogramm für die Durchführung eines jeweiligen individuellen Schraubprozesses mit Hilfe des nicht zeitkritischen Steuerungsteils vorgegeben bzw. ausgewählt. Dies erfolgt beispielsweise anhand von Vorgaben aus der übergeordneten Anlagensteuerung oder auch anhand von Bedieneingaben über die Eingabeeinheit. So erkennt beispielsweise die übergeordnete Anlagensteuerung, falls eine Änderung im Prozessablauf, beispielsweise eine Änderung bei der Schraubereinheit erfolgt ist und wählt automatisch ein modifiziertes, angepasstes individuelles Steuerprogramm aus.

Gemäß einer Variante sind hierbei beispielsweise mehrere individuelle Steuerprogramme innerhalb des zeitkritischen Steuerungsteils hinterlegt und es wird eines aus diesen hinterlegten Steuerprogrammen ausgewählt.

Gemäß einer hierzu alternativen Variante sind mehrere individuelle Steuerprogramme der übergeordneten Anlagensteuerung und damit dem nicht zeitkritischen Steuerungsteil zugeordnet. Mehrere individuelle Steuerprogramme sind hierzu in einem Speicher der Anlagensteuerung hinterlegt. Aus diesen wird ein aktuelles ausgewählt und auf den zeitkritischen Steuerungsteil übertragen.

Wie bereits erwähnt, ist der jeweiligen Schraubereinheit eine Typkennung zugewiesen, insbesondere eine elektronische Kennung, welche dem nicht zeitkritischen Steuerungsteil mitgeteilt wird. Der nicht zeitkritische Steuerungsteil prüft anhand dieser Typkennung die Eignung der Schraubereinheit speziell für das ausgewählte individuelle Steuerprogramm und/oder wählt anhand der Typkennung ein geeignetes individuelles Steuerprogramm aus. Dadurch ist sichergestellt, dass mit der speziellen am Arbeitsplatz zur Verfügung stehenden Schraubereinheit der erforderliche Schraubprozess durchgeführt werden kann und dass zudem die Schraubereinheit entsprechend ihren Spezifikationen auch geeignet angesteuert wird.

In bevorzugter Ausgestaltung ist der nicht zeitkritische Steuerungsteil als ein Funktionsmodul, also als ein Softwaremodul und damit nach Art eines ausführbaren Programmmoduls bereitgestellt und als solches in die übergeordnete Anlagensteuerung integriert. Wie zuvor erwähnt, handelt es sich bei dieser insbesondere um eine SPS-Steuerung. Dieser ausführbare Programmcode wird daher als eigenständige Softwaremodul in diese SPS Steuerung integriert. Dadurch ist eine einfache Integration in die Anlagensteuerung ermöglicht. Für die Integration in die Anlagensteuerung wird bevorzugt auf eine bestehende, für die übergeordnete Anlagensteuerung bereitgestellte Hardware-Komponente, zurückgegriffen, so dass keine zusätzliche Hardware erforderlich ist.

Bei der bereits erwähnten Eingabeeinheit für Benutzereingaben, also bei der Benutzerschnittstelle, die bevorzugt ausschließlich mit der übergeordneten Anlagensteuerung verbunden ist, handelt es sich beispielsweise um einen Touchscreen, einen eigenen Eingabe-PC oder auch lediglich um eine browserbasierte Anwendung / Benutzeroberfläche.

Mithilfe dieser Eingabeeinheit ist in bevorzugter Ausgestaltung ein jeweiliges individuelles Steuerprogramm erstellbar oder parametrierbar. Hierzu ist eine spezielle Anwendungssoftware ausgebildet, welche über die Eingabeeinheit bedienbar ist. Bei dieser kann es sich um eine separate Software handeln, die beispielsweise auf einen Server des Herstellers des Schraubsystems zur Verfügung gestellt wird. Bevorzugt ist diese Software jedoch insbesondere wiederum als ein in sich abgeschlossenes Funktionsmodul (beispielsweise nach Art eines Add-Ons oder einer eigenständigen Anwendung (App)) in die Anlagensteuerung integriert. Speziell ist dieses Software-Modul Teil des nicht zeitkritischen Steuerungsteils.

Das zuvor beschriebene Schraubsystem ist Teil einer Anlage zur Bearbeitung von Werkstücken an einem vorgegebenen Arbeitsplatz. Dieser Arbeitsplatz ist daher speziell zur Behandlung der Werkstücke eingerichtet und ist beispielsweise durch Personenschutz-Maßnahmen gesichert, sodass ein Zugang zu einem Arbeitsbereich durch Personen im Betrieb nicht möglich ist. Hierzu ist es beispielsweise vorgesehen, dass der Arbeitsplatz von einer Schutzzelle, beispielsweise einem Schutzgitter umgeben ist.

Gemäß einer bevorzugten Ausgestaltung sind am Arbeitsplatz mehrere Schraubereinheiten vorgesehen, wobei jeder Schraubereinheit jeweils ein zeitkritischer Steuerungsteil zugeordnet ist. Der nicht zeitkritische Steuerungsteil einer jeden Schraubereinheit ist wiederum ausgelagert. Bevorzugt ist für die mehreren Schraubereinheiten dabei ein gemeinsamer, nicht zeitkritischer Steuerungsteil innerhalb der übergeordneten Anlagensteuerung hinterlegt. Dieser gemeinsame, nicht zeitkritische Steuerungsteil führt daher für die mehreren Schraubereinheiten die oben beschriebenen Schritte und Funktionen aus. Dabei besteht die Möglichkeit, dass für die mehreren Schraubereinheiten unterschiedliche Steuerprogramme ausgewählt und aufgespielt werden. Die unterschiedlichen Schraubereinheiten sind insbesondere zur Durchführung von unterschiedlichen Schraubprozessen vorgesehen.

Über die übergeordnete Anlagensteuerung wird vorzugsweise allgemein ein Arbeitstakt vorgegeben, und die einzelnen Schraubprozesse werden in Abhängigkeit dieses Arbeitstaktes gesteuert.

Ein jeweiliger Arbeitsplatz umfasst typischerweise eine Fördereinrichtung, beispielsweise ein Förderband, über die dem jeweiligen Arbeitsplatz die Werkstücke zugeführt werden. Alternativ verbleiben die Werkstücke ortsfest und die zumindest eine Schraubereinheit wird mithilfe der Fördereinrichtung verfahren.

Am Arbeitsplatz erfolgen vorzugsweise weitere Verarbeitungsschritte, neben der eigentlichen Schraubverbindung. So ist beispielsweise eine Vorbereitung der Werkstücke oder eine zusätzliche Bearbeitung vorgesehen. So werden beispielsweise Befestigungselemente, wie z.B. Klipse angebracht und / oder es erfolgt eine Behandlung der Bauteiloberfläche, beispielsweise ein Einfetten.

Bevorzugt sind innerhalb der Anlage eine Vielzahl von Arbeitsplätzen zur Durchführung von unterschiedlichen Fertigungsschritten / Arbeitsabläufen vorgesehen. Die Werkstücke durchlaufen diese verschiedenen Fertigungsschritte sukzessive. Bevorzugt werden sämtliche Fertigungsschritte über die übergeordnete Anlagensteuerung gesteuert.

Über die Anlagensteuerung erfolgt der gesteuerte Transport der Werkstücke durch die einzelnen Arbeitsstationen.

Ausführungsbeispiele der Erfindung werden nachfolgend anhand der Figuren näher erläutert. Diese zeigen jeweils in schematisierten Darstellungen:
FIG 1 eine vereinfachte Darstellung einer Anlage zur Bearbeitung von Werkstücken mit Hilfe eines Schraubsystems,
FIG 2A eine Darstellung eines Schraubsystems gemäß einer ersten Variante,
FIG 2B eine Darstellung eines Schraubsystems gemäß einer zweiten Variante sowie
FIG 3 ein Schaubild zur Darstellung von verschiedenen Schritten im Zusammenhang mit der Durchführung eines Schraubprozesses.

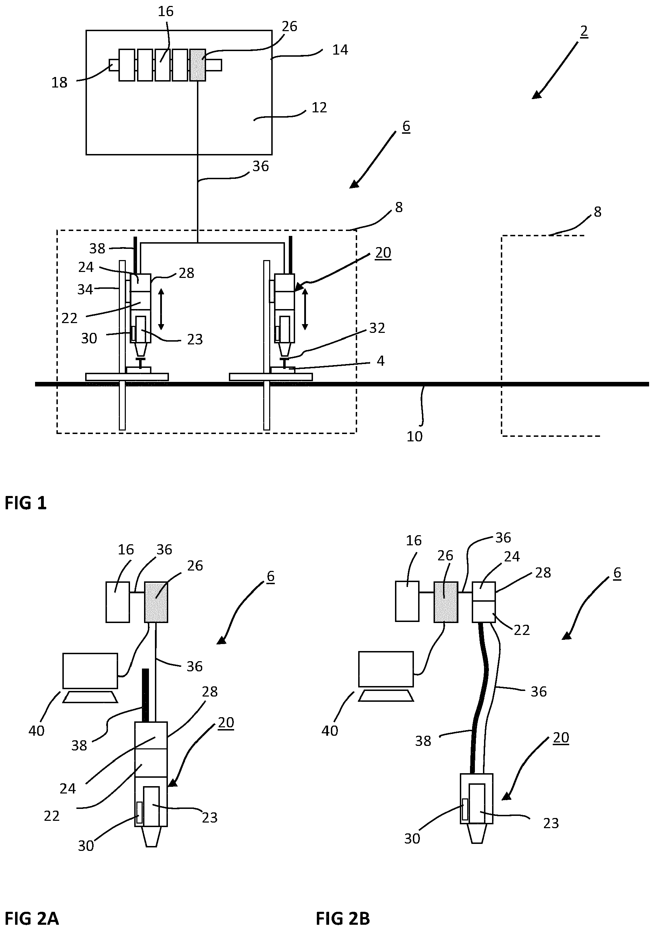

Die in der Figur 1 dargestellte Anlage 2 dient zur Bearbeitung von Werkstücken 4 mithilfe eines Schraubsystems 6. Bei der Anlage 2 handelt es sich insbesondere um eine industrielle Fertigungsanlage, bei der typischerweise mehrere Arbeitsplätze 8 vorgesehen sind, die von den Werkstücken 4 sukzessive durchlaufen werden. Hierzu ist eine Fördereinrichtung 10, beispielsweise ein Förderband vorgesehen, mit deren Hilfe die Werkstücke 4 innerhalb der Anlage 2 transportiert werden.

Zur Steuerung der gesamten Anlage 2 ist eine übergeordnete Anlagensteuerung 12 vorgesehen. Diese ist beispielsweise in einem Schaltschrank 14 integriert und weist häufig mehrere Steuermodule 16 auf, die beispielsweise auf einer Schiene 18 aufgereiht sind.

Das Schraubsystem 6 weist als wesentliche Komponenten eine Schraubereinheit 20, einen Motorregler 22, einen Antriebsmotor 23 sowie eine Schraubersteuerung auf, die aufgeteilt ist auf einen zeitkritischen Steuerungsteil 24 und einen nicht zeitkritischen Steuerungsteil 26. Hervorzuheben ist, dass der nicht zeitkritische Steuerungsteil 26 in die übergeordnete Anlagensteuerung 12 integriert ist. Weiterhin bilden der zeitkritische Steuerungsteil 24 und der Motorregler 22 eine als intelligentes Leistungsmodul 28 bezeichnete Funktionseinheit aus.

Die Schraubereinheit 20 weist zumindest eine Erfassungseinheit 30 auf, über die im Betrieb Istwerte von unterschiedlichen Schraubparametern, wie beispielsweise Drehzahl, Drehmoment usw. erfasst werden. Weiterhin umfasst die Schraubereinheit 20 einen Abtrieb mit einem Werkzeug, über welche eine jeweilige Schraube 32 im Betrieb in die zu verbindenden Werkstücke 4 eingeschraubt wird. Typischerweise weist die Schraubereinheit 20 weiterhin ein hier nicht näher dargestelltes elektrisches Typenschild auf, welches eine Typkennung enthält, die die Schraubereinheit 20 charakterisiert.

Der Motorregler 22 weist allgemein eine Leistungselektronik zum geregelten Betrieb des Antriebsmotors 23 auf. Dies bedeutet, dass über die Leistungselektronik der Antriebsmotor 23 speziell hinsichtlich seiner Drehzahl und des von ihm aufgebrachten Drehmoments angesteuert wird. Dies erfolgt insbesondere durch die Einstellung und Vorgabe des Motorstroms und / oder der Motorspannung.

Die Schraubereinheit 20 ist in der Regel stationär am Arbeitsplatz 8 angeordnet und beispielsweise an einer Zustellvorrichtung 34 befestigt. Bei dieser kann es sich um einen Linearantrieb oder auch um ein robotergeführtes System handeln.

Im Ausführungsbeispiel der Figur 1 sind am Arbeitsplatz 8 zwei Schraubereinheiten 20 angeordnet. Bei der in der Figur 1 dargestellten Ausführungsvariante ist das intelligente Leistungsmodul 28 Teil der Schraubereinheit 20, also in einem Gehäuse der Schraubereinheit 20 integriert.

Die beiden Steuerungsteile 24, 26 stehen allgemein über eine Kommunikationsverbindung 36 für eine Signal- und Datenübertragung miteinander in bidirektionaler Verbindung. Die Kommunikationsverbindung 36 erfolgt dabei vorzugsweise über einen Datenbus.

Zur elektrischen Leistungsversorgung ist eine jeweilige Schraubereinheit 20 über eine Versorgungsleitung 38 an eine entsprechende, hier nicht näher dargestellte Stromversorgung angeschlossen.

In den Figuren 2A und 2B sind zwei Ausführungsvarianten für das Schraubsystem 6 dargestellt. Allgemein ist beim Schraubsystem 6 noch eine Eingabeeinheit 40 vorgesehen, über die Benutzereingaben vorgenommen werden können. Diese steht in Kommunikationsverbindung mit dem nicht zeitkritischen Steuerungsteil 26 oder allgemein mit der Anlagensteuerung 12.

Bei der Ausführungsvariante gemäß der Figur 2A ist das intelligente Leistungsmodul 28 in der Schraubereinheit 20 integriert. Bei der Ausführungsvariante gemäß der Figur 2B ist das intelligente Leistungsmodul 28 demgegenüber als eine separate, eigenständige Baueinheit ausgebildet und quasi aus der Schraubereinheit 20 ausgegliedert. Diese eigenständige Baueinheit ist beispielsweise an einer geeigneten Stelle am Arbeitsplatz 8 angeordnet, beispielsweise an oder in einem arbeitsplatzspezifischen Schaltmodul oder Steuereinheit.

Wie in der Figur 2B dargestellt, kann sie als eigenständige Baueinheit zusammen mit den weiteren Steuerungsmodulen 16 der Anlagensteuerung 12 beispielsweise gemeinsam auf der Schiene 18 angeordnet sein. Bei der Ausführungsvariante der Figur 2B führt eine Versorgungsleitung 38 von dem intelligenten Leistungsmodul 28 zu der Schraubereinheit 20, um den Antriebsmotor 23 mit elektrischer Leistung zu versorgen. Weiterhin ist eine Kommunikationsverbindung 36 vorgesehen, über die Daten übertragen werden, beispielsweise Sensordaten von der Schraubereinheit 20, speziell von der Erfassungseinheit 30.

Ein Schraubprozess, also die Durchführung eines Schraubvorgangs wird allgemein mithilfe eines individuellen Schraub- oder Steuerprogramms gesteuert. Dieses gibt in Abhängigkeit der Anforderungen einen speziellen Verlauf der Schraubparameter vor. Anhand des individuellen Steuerprogramms wird der Antriebsmotor 23 geregelt.

Das individuelle Steuerprogramm ist in dem zeitkritischen Steuerungsteil 24 integriert. Dieses steht während eines Schraubprozesses kontinuierlich mit dem Motorregler 22 in Verbindung und übermittelt an diesen in Abhängigkeit des Fortschrittes des Schraubvorgangs Soll-Werte für die Schraubparameter. Der Motorregler 22 setzt diese Sollwerte in Steuersignale (Strom- und Spannungssignale) für den Antriebsmotor 23 um. Während des Schraubprozesses werden die Werte der Schraubparameter über die Erfassungseinheit 30 als Istwerte ermittelt, die unmittelbar an den zeitkritischen Steuerungsteil 24 übermittelt werden. Dieser wertet die Istwerte aus und korrigiert gegebenenfalls die Sollwertvorgaben, sodass ein Regelkreis gebildet ist.

Sämtliche zeitkritischen Vorgänge sind innerhalb des zeitkritischen Steuerungsteils 24 integriert. Dazu zählt insbesondere der zuvor beschriebene Regelkreis zur Regelung der Schraubparameter.

Demgegenüber werden im nicht zeitkritischen Steuerungsteil 26 nicht zeitkritische Schritte ausgeführt. Hierzu zählen insbesondere die Erstellung, Änderung und Verwaltung von verschiedenen individuellen Steuerprogrammen, inklusive der Zwischenspeicherung sowie gegebenenfalls Übertragung an den zeitkritischen Steuerungsteil 24.

Weiterhin wird mittels des nicht zeitkritischen Steuerungsteils 26 das elektronische Typenschild ausgelesen und die Eignung der Schraubereinheit 20 überprüft. Weiterhin erfolgt eine Speicherung der im Verlauf eines Schraubprozesses erfassten Messergebnisse (Istwerte) für die verschiedenen Schraubparameter, sodass ein jeweiliger Schraubprozess hierdurch auch dokumentiert wird.

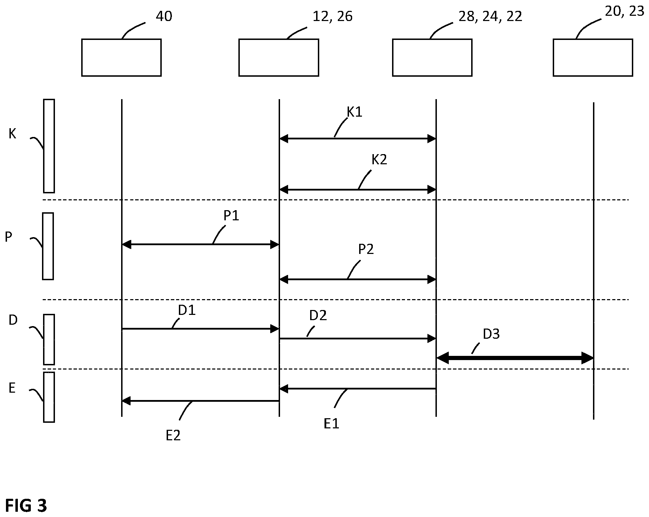

In Figur 3 ist beispielhaft eine Abfolge von verschiedenen Schritten bei der Vorbereitung und Durchführung eines Schraubprozesses und die Aufteilung der Schritte auf die einzelnen Einheiten dargestellt.

In der obersten Zeile der Figur 3 sind in Querrichtung schematisiert die Eingabeeinheit 40, Anlagensteuerung 12 mit dem nicht zeitkritischen Steuerungsteil 26, das intelligente Leistungsmodul 28 (zeitkritische Steuerungsteil 24 und Motorregler 22) sowie schließlich die Schraubereinheit 20, speziell der Antriebsmotor 23 dargestellt.

Von oben nach unten sind unterschiedliche Phasen bei der Vorbereitung und Durchführung des Schraubprozesses dargestellt. In der ersten Zeile ist eine Kommunikationsverbindung K dargestellt. Bei dieser treten zunächst die Anlagensteuerung 12 und das intelligentes Leistungsmodul 28 in Kommunikationsverbindung. Dabei wird durch die Anlagensteuerung 12 eine Kommunikation aufgebaut, die seitens des intelligenten Leistungsanteils 28 bestätigt wird (Schritt K1). Im nächsten Schritt wird seitens der Anlagensteuerung 12 das Typenschild abgerufen und vom Leistungsmodul 28 wird die gewünschte Information geliefert (Schritt K2).

In der nächsten Phase folgt eine Programmauswahl P eines geeigneten individuellen Steuerprogramms, anhand dessen der Schraubprozess geführt werden soll. Hierzu wird seitens des Benutzers über die Eingabeeinheit 40 beispielsweise lediglich ein bereits bestehendes Steuerprogramm ausgewählt. Alternativ besteht auch die Möglichkeit, dass ein solches komplett neu über eine geeignete Hilfssoftware erstellt wird, oder dass ein bestehendes Steuerprogramm individuell angepasst wird (Schritt P1). Speziell bei einer Erstellung eines neuen Steuerprogramms oder auch bei Änderung eines bestehenden Steuerprogramms erfolgt über den nicht zeitkritischen Steuerungsteil 26 eine Validierung des Steuerprogramms. Das ausgewählte, individuelle Steuerprogramm wird anschließend von dem nicht zeitkritischen Steuerungsteil 26 an den zeitkritischen Steuerungsteil 24 übertragen und die Übertragung wird von diesem bestätigt (Schritt P2).

In der nächsten Phase erfolgt die Durchführung D des Schraubprozesses auf Basis des ausgewählten Steuerprogramms. Im Ausführungsbeispiel der Figur 3 ist hierzu vorgesehen, dass über die Eingabeeinheit 40 ein Startsignal ergeht, welches von der Anlagensteuerung 12 an das intelligente Leistungsmodul 28 weitergeleitet wird (Schritte D1, D2). Alternativ kann ein solches Startsignal auch automatisch von der Anlagensteuerung 12 generiert werden. Das Leistungsmodul 28 startet daraufhin mit der Ansteuerung und Regelung des Antriebsmotors 23, wodurch der eigentliche Schraubprozesses gestartet und durchgeführt wird (Schritt D3). Dies erfolgt durch die Ausführung des oben beschriebenen Regelkreises, bei dem permanent Istwerte von der Schraubereinheit 20 an das intelligente Leistungsmodul 28 übermittelt werden und entsprechende Sollwerte in Abhängigkeit des ausgewählten individuellen Steuerprogramms eingestellt werden.

Nach Abschluss des Schraubvorgangs D erfolgt in einer letzten Phase noch die Dokumentation der Schraubergebnisse E. Hierzu werden diese, die zuvor im zeitkritischen Steuerungsteil 24 gespeichert wurden, in den nicht zeitkritischen Steuerungsteil 26 (Schritt E1) und bei Bedarf weiter an einen weitergehenden Speicherort auf Benutzerseite (Schritt E2) übermittelt. Dies kann beispielsweise ein in der Eingabeeinheit 40 integrierter oder dieser zugeordneter Speicherort sein.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Anlage
- 4: Werkstück
- 6: Schraubsystem
- 8: Arbeitsplatz
- 10: Fördereinrichtung
- 12: Anlagensteuerung
- 14: Schaltschrank
- 16: Steuermodul
- 18: Schiene
- 20: Schraubereinheit
- 22: Motorregler
- 23: Antriebsmotor
- 24: zeitkritischer Steuerungsteil
- 26: nicht zeitkritischer Steuerungsteil
- 28: intelligentes Leistungsmodul
- 30: Erfassungseinheit
- 32: Schraube
- 34: Zustellvorrichtung
- 36: Kommunikationsverbindung
- 38: Versorgungsleitung
- 40: Eingabeeinheit

- K: Kommunikationsverbindung
- P: Programmauswahl
- D: Durchführung des Schraubprozesses
- E: Dokumentation der Schraubergebnisse

## Patentansprüche

1. Schraubsystem (6) mit einer Schraubereinheit (20), die einen elektrischen Antriebsmotor (23), einen Motorregler (22) zur Steuerung des Antriebsmotors (23) sowie eine Schraubersteuerung zur Steuerung eines Schraubprozesses aufweist, **dadurch gekennzeichnet, dass** die Schraubersteuerung aufgeteilt ist in einen zeitkritischen Steuerungsteil (24) und in einen nicht zeitkritischen Steuerungsteil (26), und der nicht zeitkritische Steuerungsteil (26) zur Integration in einer übergeordneten Anlagensteuerung (12) vorgesehen und ausgebildet ist, wobei über die übergeordnete Anlagensteuerung (12) weitere Prozesse einer industriellen Anlage (2) neben dem Schraubprozess gesteuert werden.

2. Schraubsystem (6) nach Anspruch 1, **dadurch gekennzeichnet, dass** der zeitkritische Steuerungsteil (24) und der Motorregler (22) ein intelligentes Leistungsmodul (28) bilden, welches in der Schraubereinheit (20) integriert ist.

3. Schraubsystem (6) nach Anspruch 1, **dadurch gekennzeichnet, dass** der zeitkritische Steuerungsteil (24) und der Motorregler (22) ein intelligentes Leistungsmodul (28) bilden, welches als separate Baueinheit zusätzlich zur Schraubereinheit (20) ausgebildet ist, so dass das Schraubsystem (6) drei getrennte Baueinheiten aufweist, nämlich die Schraubereinheit (20), das intelligente Leistungsmodul (28) sowie eine Hardware-Komponente in der übergeordneten Anlagensteuerung (12) mit dem nicht zeitkritischen Steuerungsteil (26) .

4. Schraubsystem (6) nach einem der vorhergehenden Ansprüche, **dadurch gekennzeichnet, dass** der der zeitkritische Steuerungsteil (24) zur Ausführung folgender Schritte ausgebildet ist:
- Speicherung und Ausführung zumindest eines individuellen Steuerprogramms zur Ausführung eines individuellen Schraubprozesses,
- Verarbeitung von Istwerten des Schraubprozesses,
- Sollwertvorgabe für den Motorregler (22) auf Basis des individuellen Steuerprogramms und auf Basis der Istwerte,
- Signal- und Datenaustausch mit dem nicht zeitkritischen Steuerungsteil (26), insbesondere zur Übermittlung von Messwerten zum durchgeführten Schraubprozess, zur Auswahl eines individuellen Steuerprogrammes, zur Übermittlung von Statusinformationen zum Schrauber.

5. Schraubsystem (6) nach einem der vorhergehenden Ansprüche, **dadurch gekennzeichnet, dass** der nicht zeitkritische Steuerungsteil (26) zur Ausführung von ein oder mehreren der folgenden Funktionen ausgebildet ist:
- Funktionen im Zusammenhang mit der Erstellung oder mit der Parametrierung eines individuellen Steuerprogramms,
- Plausibilitätsprüfung oder Gültigkeitsprüfung von individuellen Steuerprogrammen,
- Verwaltung von individuellen Steuerprogrammen, insbesondere deren Speicherung sowie bei Bedarf deren Übertragung in den zeitkritischen Steuerungsteil (24),
- Signal- und Datenaustausch mit dem zeitkritischen Steuerungsteil (24),
- Überprüfen des Status des Schraubers inklusive einer Werkzeugidentifikation,
- Kommunikation mit der übergeordneten Anlagensteuerung (12) über den nicht zeitkritischen Steuerungsteil (26),
- Kommunikation mit einer Eingabeeinheit für Benutzereingaben,
- Speichern von Messwerten zum durchgeführten Schraubprozess.

6. Schraubsystem (6) nach einem der vorhergehenden Ansprüche, **dadurch gekennzeichnet, dass** die Schraubereinheit (20) zur Durchführung von unterschiedlichen individuellen Schraubprozessen vorgesehen ist, die sich im Hinblick auf zumindest einen Schraubparameter unterscheiden, wobei die individuellen Schraubprozesse jeweils durch ein individuelles Steuerprogramm gesteuert werden, welches zumindest temporär im zeitkritischen Steuerungsteil (24) hinterlegt ist.

7. Schraubsystem (6) nach dem vorhergehenden Anspruch, **dadurch gekennzeichnet, dass** das individuelle Steuerprogramm von der übergeordneten Anlagensteuerung (12) ausgewählt wird, und / oder dass bei der übergeordneten Anlagensteuerung (12) mehrere individuelle Steuerprogramme hinterlegt sind und mindestens ein individuelles Steuerprogramm auf den zeitkritischen Steuerungsteil (24) übertragen wird.

8. Schraubsystem (6) nach einem der vorhergehenden Ansprüche, **dadurch gekennzeichnet, dass** die Schraubereinheit (20) eine Typkennung aufweist und diese dem nicht zeitkritischen Steuerungsteil (26) mitteilt, wobei der nicht zeitkritische Steuerungsteil (26) anhand der Typkennung die Eignung der Schraubereinheit (20) prüft und / oder anhand der Typkennung ein geeignetes individuelles Steuerprogramm auswählt.

9. Schraubsystem (6) nach einem der vorhergehenden Ansprüche, **dadurch gekennzeichnet, dass** der nicht zeitkritische Steuerungsteil (26) als ein Softwaremodul bereitgestellt ist und als solches in die übergeordnete Anlagensteuerung (12) integriert ist.

10. Schraubsystem (6) nach einem der vorhergehenden Ansprüche, **dadurch gekennzeichnet, dass** eine Eingabeeinheit (40) für Benutzereingaben vorgesehen ist, welche mit der übergeordneten Anlagensteuerung (12) verbunden ist, wobei vorzugsweise mit Hilfe der Eingabeeinheit (40) ein individuelles Steuerprogramm erstellbar ist

11. Anlage (2) zur Bearbeitung von Werkstücken an einem Arbeitsplatz (8) mit einem Schaubsystem (6) nach einem der vorhergehenden Ansprüche, wobei eine übergeordnete Anlagensteuerung (12) vorgesehen ist, in der der nicht zeitkritische Steuerungsteil (26) integriert ist und über die weitere Prozesse der Anlage (2) neben dem Schraubprozess gesteuert werden.

12. Anlage (2) nach dem vorhergehenden Anspruch, bei dem am Arbeitsplatz (8) mehrere Schraubereinheiten (20) vorgesehen sind und jeder Schraubereinheit (20) jeweils ein zeitkritischer Steuerungsteil (24) zugeordnet ist und in der übergeordneten Anlagensteuerung (12) für die mehreren Schraubereinheiten (20) ein gemeinsamer, nicht zeitkritischer Steuerungsteil (26) vorgesehen ist.

13. Anlage (2) nach einem der beiden vorhergehenden Ansprüche, bei der die übergeordnete Anlagensteuerung (12) mehrere Steuermodule (16) als Hardware-Komponenten aufweist, die innerhalb einer Baueinheit wie z.B. einem Schaltschrank angeordnet sind, wobei der nicht-zeitkritische Steuerungsteil (26) in einem der Steuermodule (16) als Software-Modul integriert ist und mit Hilfe des Steuermoduls (16) insbesondere weitere Prozesse der Anlage neben dem Schraubprozess gesteuert werden.

14. Anlage (2) nach einem der Ansprüche 12 bis 14, bei der mehrere Arbeitsplätze (8) vorgesehen sind, welche bevorzugt über eine Fördereinrichtung (10) für Werkstücke miteinander verbunden sind, wobei die zentrale Anlagensteuerung (12) die Arbeitsabläufe an den unterschiedlichen Arbeitsplätzen (8) steuert und insbesondere einen Arbeitstakt vorgibt und die einzelnen Schraubprozesse in Abhängigkeit des Arbeitstaktes steuert.
